(19) Europäisches Patentamt
European Patent Office
Office européen des brevets

(11) Publication number: 0 323 245 A1

(12) # EUROPEAN PATENT APPLICATION

(21) Application number: 88312380.4

(22) Date of filing: 28.12.88

(51) Int. Cl.$^4$: G 09 B 29/10
G 01 C 21/22

(30) Priority: 28.12.87 JP 333057/87

(43) Date of publication of application:
05.07.89 Bulletin 89/27

(84) Designated Contracting States: DE FR GB

(71) Applicant: AISIN AW CO., LTD.
10, Takane Fujii-cho
Anjo-shi Aichi-ken 444-11 (JP)

KABUSHIKI KAISHA SHINSANGYOKAIHATSU
1-33-3, Hatagaya Shibuya-Ku
Tokyo 151 (JP)

(72) Inventor: Nimura, Mitsuhiro c/o Aisin AW Co., Ltd.
10 Takane Fujii-cho
Anjo-shi Aichi-ken 444-11 (JP)

(74) Representative: Bubb, Antony John Allen et al
GEE & CO. Chancery House Chancery Lane
London WC2A 1QU (GB)

(54) **Apparatus for effecting instruction with speech and display.**

(57) An apparatus for effecting instructions with speech and visual display in which when a destination input window is displayed, a message is output and a speech track number is simultaneously called to output a corresponding speech. When information on an intersection is displayed, the travel distance is calculated to display the remaining distance to the intersection. At the same time, a speech is output by selecting a predetermined speech number in correspondence with the travel direction and the remaining distance. Also, processing for guidance at the intersection is performed, and whether or not any one of remaining distances in speech tracks of a ROM corresponds to the present remaining distance is determined, thereby outputting a desired speech in correspondence with the traveling direction. The invention thus enables functions of effecting instruction with speech and display and enables the apparatus to be operated quickly and easily.

Fig. I

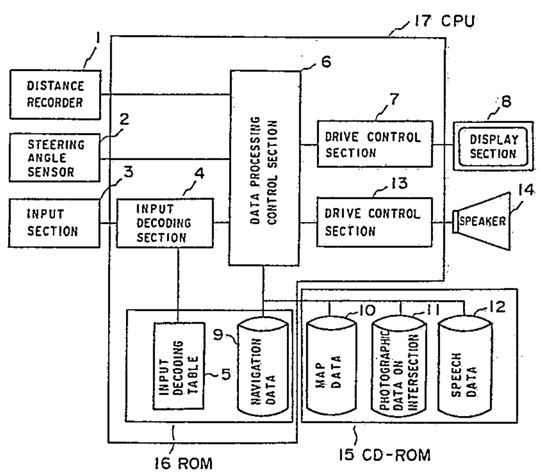


EP 0 323 245 A1

## Description

# APPARATUS FOR EFFECTING INSTRUCTION WITH SPEECH AND DISPLAY

This invention relates to an apparatus for effecting instructions by using speeches and visual display.

In office automation apparatus or information machines, various kinds of guidance information for desired instructions are indicated on a display screen when information is input or output while being displayed on the screen.

Also, a type of vehicle navigation system for guidance to a destination along a predetermined route has been proposed in which the position of the vehicle is indicated on a map displayed on a monitor TV screen together with an image of a selected course. The applicant of the present invention has also proposed, in Japanese Patent Application No. 62-002, a navigation system in which photographs of intersections where the driver needs to turn the vehicle for traveling to his destination, names and configurations of the intersections, the directions of travel to the intersections are displayed on the screen.

Conventional instruction apparatus, however, make use of visual display alone and instructions thereby made are not easy to understand. There is therefore a possibility of the driver failing to perform desired operations.

The above-mentioned navigation system in which the vehicle position is indicated on the map on the monitor TV screen together with a selected course entails a problems in that if an image of an intersection where the driver needs to turn the vehicle is close to images of other intersections, it is difficult for the driver to discriminate the image of the former.

The type of apparatus displaying information on an intersection where turning is needed, e.g., photograph and name does not enable the driver to definitely ascertain where the vehicle is traveling. To cope with this problem, speech output may be used. This method, however, requires a large quantity of speech data, resulting in an increase in the memory cost if a ROM is employed or in a delay in access in the case of a magnetic tape.

It is an object of the present invention to provide an instruction apparatus which makes use of a CD-ROM (Compact-disk read only memory) to enable a function of effecting instructions with visual display and speeches so that the apparatus can operated quickly in a simple manner.

To this end, the present invention provides an instruction apparatus for outputting guidance information on a display screen with speech and visual display, having an input section, a memory device for storing items of guidance information, and a display section for outputting one of the items of guidance information by information input through the input section, wherein the memory device has a CD-ROM for storing data on speeches provided as guidance data, and one of the speeches is output when one of the items of guidance information is output from the display section.

The present invention also provides an apparatus for effecting instruction by using speech and visual display in an navigation system for outputting information for guidance to a destination, the apparatus having an input section, a memory device for storing items of guidance information, and a display section for outputting one of the items of guidance information by information input through the input section, wherein the memory device has a CD-ROM for storing data on speeches provided as guidance data, and one of the speeches is output when one of the items of guidance information is output from the display section.

In the operation of the apparatus for effecting instruction by using speech and visual display in accordance with the present invention, a message: "select a destination" is displayed after a destination input window has been displayed. Simultaneously, a speech track number 1 is called to output a speech: "select a destination".

When information on an intersection is displayed, the travel distance is detected to calculate the distance remaining until the intersection is reached, and the calculated remaining distance is displayed on the display screen. At the same time, a speech truck number is selected in correspondence with the traveling direction and the reaming distance, and a speech, for example,"turn to the left after traveling about 100 m" is output.

In accordance with the present invention, therefore, the adoption of the CD-ROM realizes functions of effecting instructions with visual display and speech and enables the apparatus to be operated quickly and easily.

When applied to a navigation system, the present invention enables the driver to input a position or confirm the vehicle position on a course quickly and easily as well as to confirm an intersection at which the driver needs to turn the vehicle, by simultaneously effecting speech output and display of a map, a photograph of an intersection, and so on.

Still other objects and advantages of the invention will in part be obvious and will in part be apparent from the specification.

The invention accordingly comprises the features of construction, combinations of elements, and arrangement of parts which will be exemplified in the construction hereinafter set forth, and the scope of the invention will be indicated in the claims.

## BRIEF DESCRIPTION OF THE DRAWINGS

Fig. 1 is a diagram of the construction of a vehicle navigation system in accordance with the present invention;

Figs. 2 and 3 are tables of the data structures in accordance with the present invention;

Figs. 4 to 8 are diagrams of examples of display relating to the present invention;

Fig. 9 is a flow chart of the operation of the vehicle navigation system in accordance with the present invention having functions of effecting instructions with speeches and visual display; and

Fig. 10 is a flow chart of a processing in accordance with another embodiment of the present invention.

Embodiments of the present invention will be described below with reference to the accompanying drawings.

Fig. 1 shows the construction of a vehicle navigation system to which the present invention is applied is illustrated. The navigation system has a distance recorder 1, a steeling angle sensor 2, an input section 3, an input decoding section 4, an input decoding table 5, a data processing section 6, a drive control section 7, a display section 8, a navigation data file 9, a map data file 10, a photographic data file 11, a speech data file 12, a drive control section, and a speaker 14.

The distance recorder 1 is adapted to measure the distance through which the vehicle has traveled. The distance recorder 1 may be a means for detecting the number of revolutions of a wheel, a means for detecting the acceleration and integrating a detected value two times, or other measuring means. The steering angle sensor 2 which detects whether or not the vehicle has turned a corner may be constituted by an optical rotary sensor, a rotary variable resistor or the like attached to, for example, a rotary member of the steering wheel or may be an angle sensor attached to the steering system.

The input section 3 is constituted by a touch panel and is used, in combination with the screen of the display section 8, to show keys and a menu on the screen and enable input through the screen.

The input decoding section 4 is adapted to decode data input through the input section 3 by referring to the input decoding table 5. If, for course setting, a present point and a destination point are input, they are converted into present point data and destination data with on the basis of the input decoding table 5. The input decoding table 5 is therefore set in correspondence with the kind of data input through the input section 3.

The data processing control section 6 is the center of the navigation system. When a course is set by input through the input section 3, the data processing control section 6 reads out navigation data relating to the course stored in the file 9 and execute processing with this data. The navigation data is prepared for operations of indicating, on the display screen of the display section 8, guidance maps for the traveled course, displaying photographs showing specific features of intersections as well as landmarks on the course, and displaying other item of guidance information including the distance remaining until each intersection is reached while outputting speech guidance though the speaker 14.

Items of data on such maps, photographs and speeches are stored in the files 10 to 12 set in the CD-ROM 15. The drive control section 7 controls the image output to the display section 8, and the drive control section 13 controls the speech output to the speaker 14. The time at which speech signal recording starts, the time at which the recording ends, the track number assigned to each speech signal are stored in the CD-ROM 15 together with items of data on images in correspondence with speech signal recording time and the truck number.

Otherwise, the map data 10 and the photographic data 11 may be stored in a ROM 16 of a CPU 17. In this case, the ROM 16 stores image data and coordinate data.

When this navigation system selects a course by being supplied with a present point and a destination point through the input section 3 before traveling, the data processing control section 6 reads out navigation data stored in the file 9 corresponding to the selected course and executes processing on the bases of the navigation data. The navigation data is used to display through the display section 8 guidance charts, the present position, guidance at intersections and so forth for the selected course on the basis of measurement information supplied from the distance recorder 1 and the steering angle sensor 2.

Next, the structure of speech data relating to the present invention will be described below with reference to Figs. 2 and 3.

Fig. 2 shows speech data stored in the CD-ROM 15 in which groups of data items representing speeches as illustrated are stored with respective truck numbers.

Fig. 3 shows data for calling track numbers assigned to the data items stored in the ROM 16 or the CD-ROM 15. The speech truck numbers are placed in correspondence with combinations of leftward/rightward traveling directions and values of remaining distance.

Next, the flow of processing for instruction functions using speeches and visual display which is specific feature of the present invention will be described below with reference to Fig. 9. In the illustrated example, a destination is input. In step 21, a destination input window such as that shown in Fig. 4 is displayed first. In this example, the destination is displayed as one of destination items: "sight-seeing", "meal", "lodging", "souvenir" and "return" while portions of the touch panel though which inputting is possible are indicated with red illumination, and a message: "select your destination" is also displayed. At the same time, in step 22, the speech track number 2 (Fig. 2) is called, and the speech: "select your destination" is output.

In step 23, whether or not an input through the touch panel is within the display region of the selection items is checked. This is a processing for doing the touch input again if a portion out of the display region has been touched by the finger. If the input is within the display region, whether or not "return" has been selected through the window shown in Fig. 4 is checked in step 24. If, for example, "sight-seeing" has been selected, the process proceeds to step 29 to display a place name list selection window such as that shown in Fig. 5. At the same time, in step 30, the speech track number 3 (Fig. 2) is called and the speech: "select your destination" is output.

Then, in step 31, whether or not the input through the touch panel is within the display region of the items to be selected is checked. If it is within the display region, whether the selected item is "previous page" or "next page" is checked in step 32. If YES, the place name list display page is changed in step 33 and the process returns to step 29. After one of the selection items in the displayed window has been selected, a selected place name confirmation window such as that shown in Fig. 6 is displayed in step 34. Through this window, the selected place name is displayed together with red-illumination display of "OK" and "cancel". Simultaneously, a speech: "is it all right" is displayed. At the same time, in step 35, the speech track number 4 (Fig. 2) is called and the speech "is it all right" is output.

Similarly, is step 36, whether or not the input through the touch panel is within the display region of the selection items is checked. If it is within the display region, whether or not the selected item is "OK" is checked in step 37. If "cancel" has been selected, the process returns to step 29 and the above-described processing is repeated. If "OK" has been selected, the process returns to the main navigation process.

If in step 24 "return" shown in Fig. 4 has been selected, a "return" confirmation window such as that shown in Fig. 7 is displayed in step 25, and a message: "will you return" is displayed. At the same time, in step 26, the speech track number 2 (Fig. 2) is called and the speech: "will you return" is output. In step 27, whether or not the input through the touch panel is within the display region is checked. If it is within the display region, whether or not the selected item is "YES" is determined in step 28. If "NO", the process returns to step 21 to repeat the above-described processing. If "YES", the process returns to the main navigation process.

Next, another embodiment of the present invention will be described with reference to Fig. 10. In the second embodiment, the function of effecting instructions with speeches and visual display is applied to guidance at intersections. First, in step 51, intersection information on the traveling direction to be selected at an intersection, the distance to the intersection, and so on is set and, in step 52, the intersection information is displayed as shown in Fig. 8. In this case, the name and a photograph of the intersection and the traveling direction are displayed. Then, in step 53, the travel distance is detected to calculate the distance remaining until the intersection is reached and, in step 54, the calculated remaining distance is displayed on the screen. In step 55, whether or not any speech is being output is checked. If a speech is being output, the process returns to step 53. If no speech output, whether or not one of remaining distances in speech tracks of the ROM corresponds to the present remaining distance is determined in step 56. In the case of NO, the process returns to step 53. In the case of YES, the speech track number is selected in correspondence with the traveling direction and the remaining distance in the data shown in Fig. 3, and a speech: "turn to the left after traveling about 100 m" is output.

The present invention is not limited to the above-described embodiments and can otherwise be modified in various ways.

For example, the invention is not limited to the navigation system but applicable to learning/instruction machines which make use of both visual display and speech.

In the above described embodiment, the instruction functions based on speech and visual outputs are applied to destination inputting and intersection guidance. The present invention, however, is not limited to this, and it can be applied to the process of inputting the present point, processing of various kinds of guidance information, explanation of inputting procedure, and other operations.

## Claims

1. An instruction apparatus for outputting guidance information on a display screen with speech and visual display, comprising an input section, a memory device for storing items of guidance information, and a display section for outputting one of said items of guidance information by information input through said input section, wherein said memory device has a CD-ROM for storing data on speeches provided as guidance data, and one of said speeches is output when one of said items of guidance information is output from said display section.

2. An apparatus for effecting instruction by using speech and visual display in an navigation system for outputting information for guidance to a destination, said apparatus comprising an input section, a memory device for storing items of guidance information, and a display section for outputting one of said items of guidance information by information input through said input section, wherein said memory device has a CD-ROM for storing data on speeches provided as guidance data, and one of said speeches is output when one of said items of guidance information is output from said display section.

3. An apparatus for effecting instructions by using speech and visual display according to claim 2, wherein a destination point or a present point is input through said input section.

4. An apparatus for effecting instructions by using speech and visual display according to claim 2, wherein said guidance information includes information on intersections.

5. An apparatus for effecting instructions by using speech and visual display according to claim 2, wherein said guidance information includes explanation of inputting procedure.

Fig. 1

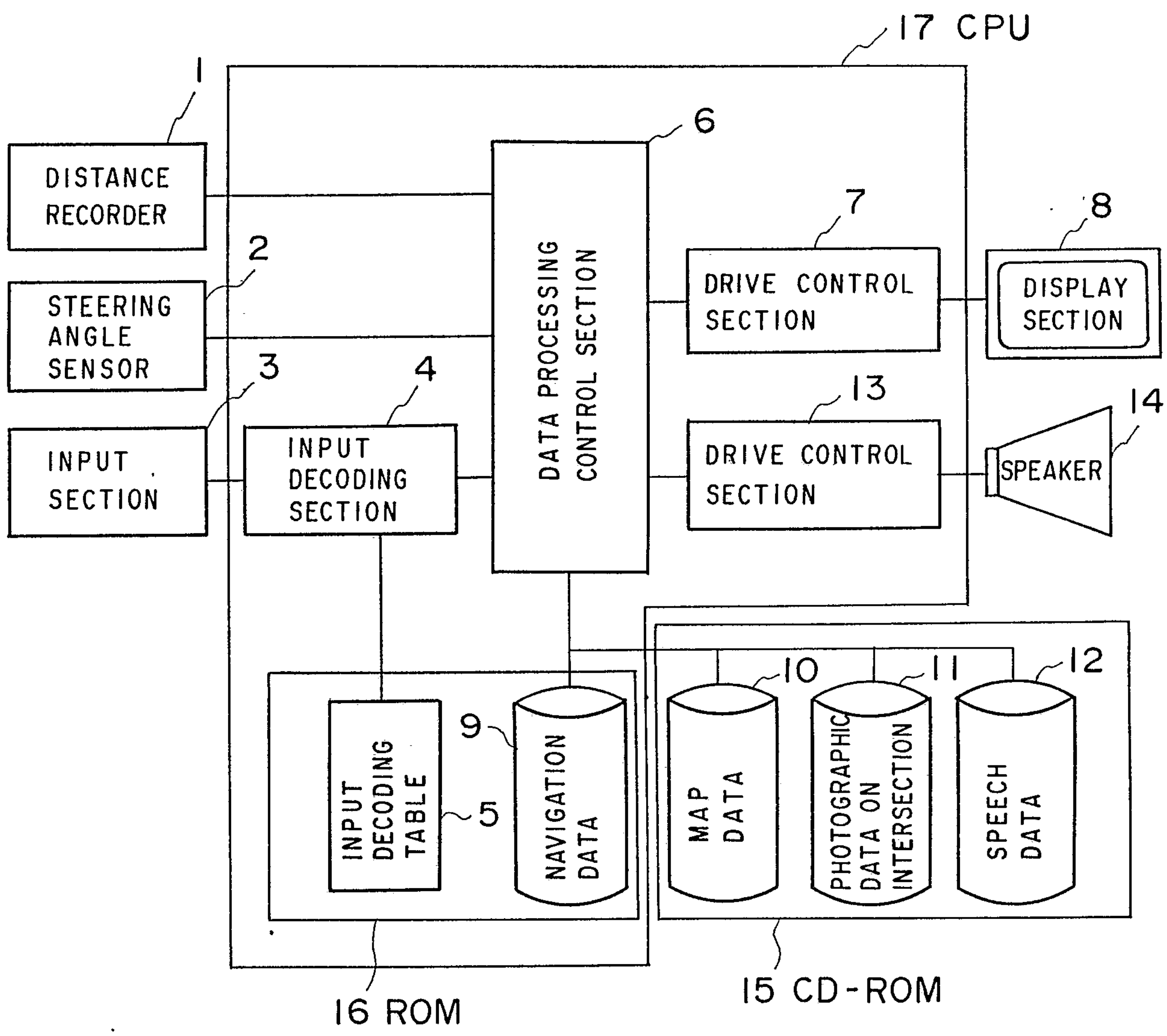
17 CPU
1
DISTANCE RECORDER
2
STEERING ANGLE SENSOR
3
INPUT SECTION
4
INPUT DECODING SECTION
6
DATA PROCESSING CONTROL SECTION
7
DRIVE CONTROL SECTION
8
DISPLAY SECTION
13
DRIVE CONTROL SECTION
14
SPEAKER
5
INPUT DECODING TABLE
9
NAVIGATION DATA
10
MAP DATA
11
PHOTOGRAPHIC DATA ON INTERSECTION
12
SPEECH DATA
16 ROM
15 CD-ROM

# Fig. 2

| TRACK NO. | SPEECH CONTENT |
|---|---|
| 1 | SELECT YOUR DESTINATION |
| 2 | WILL YOU RETURN ? |
| 3 | SELECT A PLACE YOU WANT TO GO. |
| 4 | IS IT ALL RIGHT ? |
| ⋮ | ⋮ |
| 14 | TURN TO THE LEFT AFTER TRAVELING 100m |
| 15 | TURN TO THE LEFT AFTER TRAVELING 200m |
| 16 | TURN TO THE LEFT AFTER TRAVELING 300m |
| 17 | TURN TO THE LEFT AFTER TRAVELING 500m |
| 18 | TURN TO THE LEFT AFTER TRAVELING 1000m |
| ⋮ | ⋮ |
| 24 | TURN TO THE RIGHT AFTER TRAVELING 100m |
| 25 | TURN TO THE RIGHT AFTER TRAVELING 200m |
| 26 | TURN TO THE RIGHT AFTER TRAVELING 300m |
| 27 | TURN TO THE RIGHT AFTER TRAVELING 500m |
| 28 | TURN TO THE RIGHT AFTER TRAVELING 1000m |
| ⋮ | ⋮ |

Fig.3

| TRAVELING DIRECTION | REMAINING DISTANCE (m) | SPEECH TRACK NO. |
|---|---|---|
| LEFT | 100 | 14 |
| ↑ | 200 | 15 |
| ↑ | 300 | 16 |
| ↑ | 500 | 17 |
| ↑ | 1000 | 18 |
| RIGHT | 100 | 24 |
| ↑ | 200 | 25 |
| ↑ | 300 | 26 |
| ↑ | 500 | 27 |
| ↑ | 1000 | 28 |

Fig.4

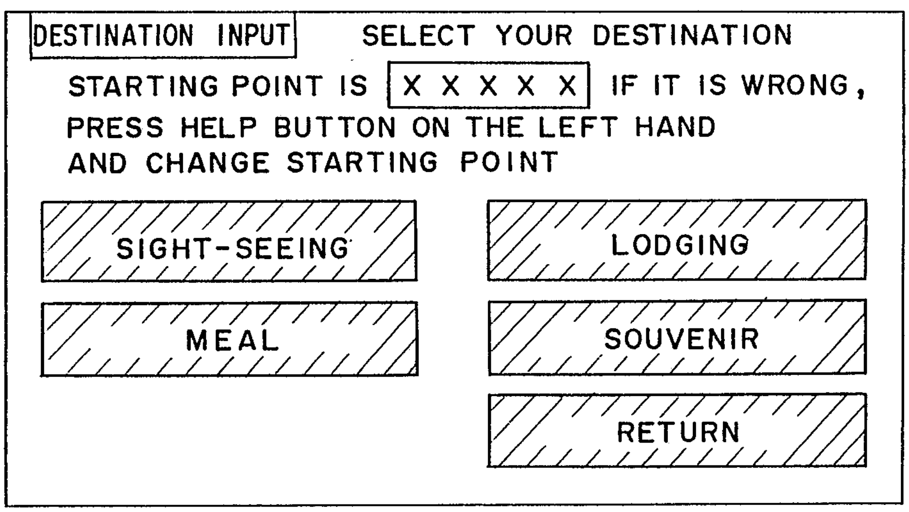

Fig. 5

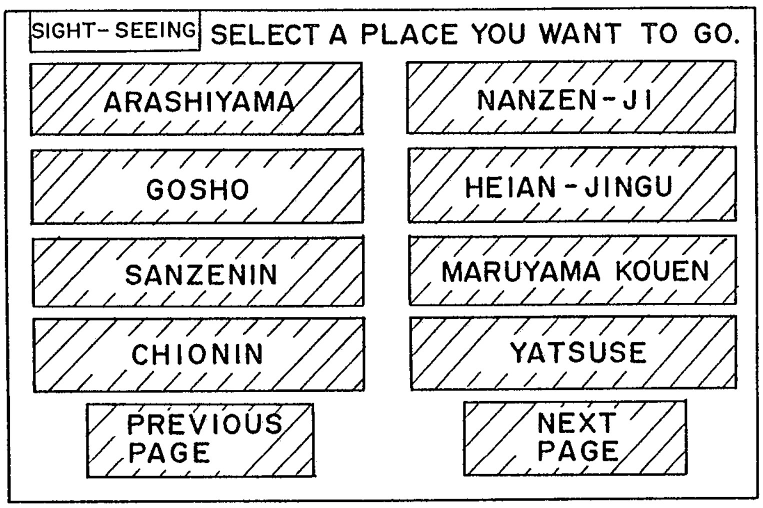
SIGHT-SEEING
SELECT A PLACE YOU WANT TO GO.
ARASHIYAMA
NANZEN-JI
GOSHO
HEIAN-JINGU
SANZENIN
MARUYAMA KOUEN
CHIONIN
YATSUSE
PREVIOUS PAGE
NEXT PAGE

Fig. 6

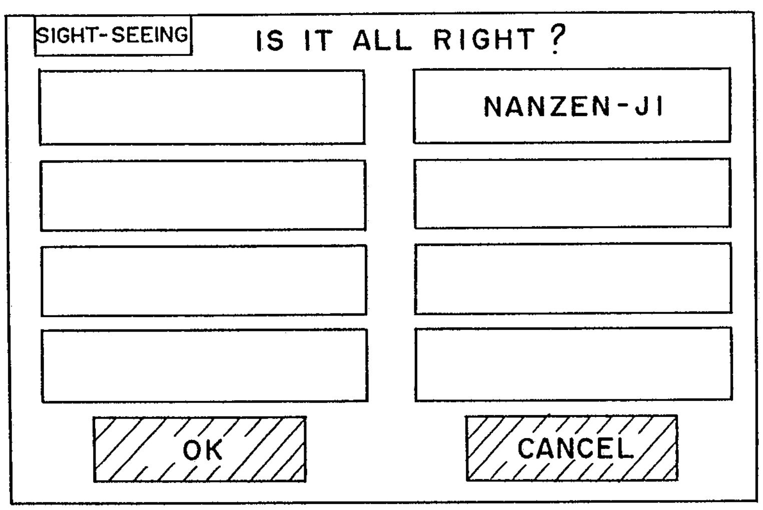
SIGHT-SEEING
IS IT ALL RIGHT ?
NANZEN-JI
OK
CANCEL

Fig. 7

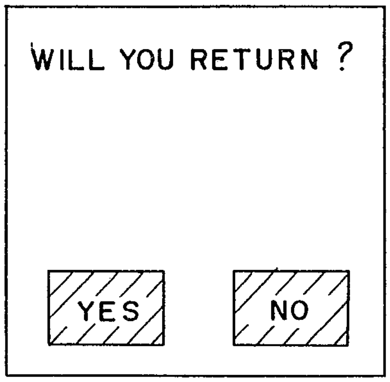


Fig. 8

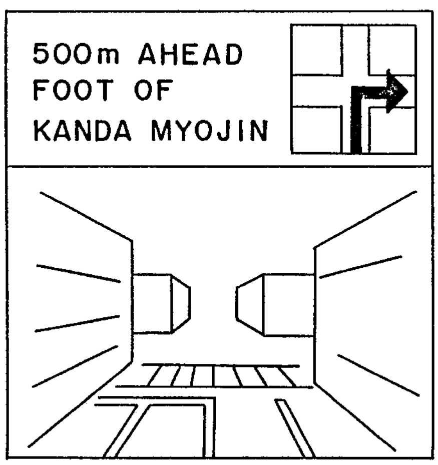

# Fig. 9

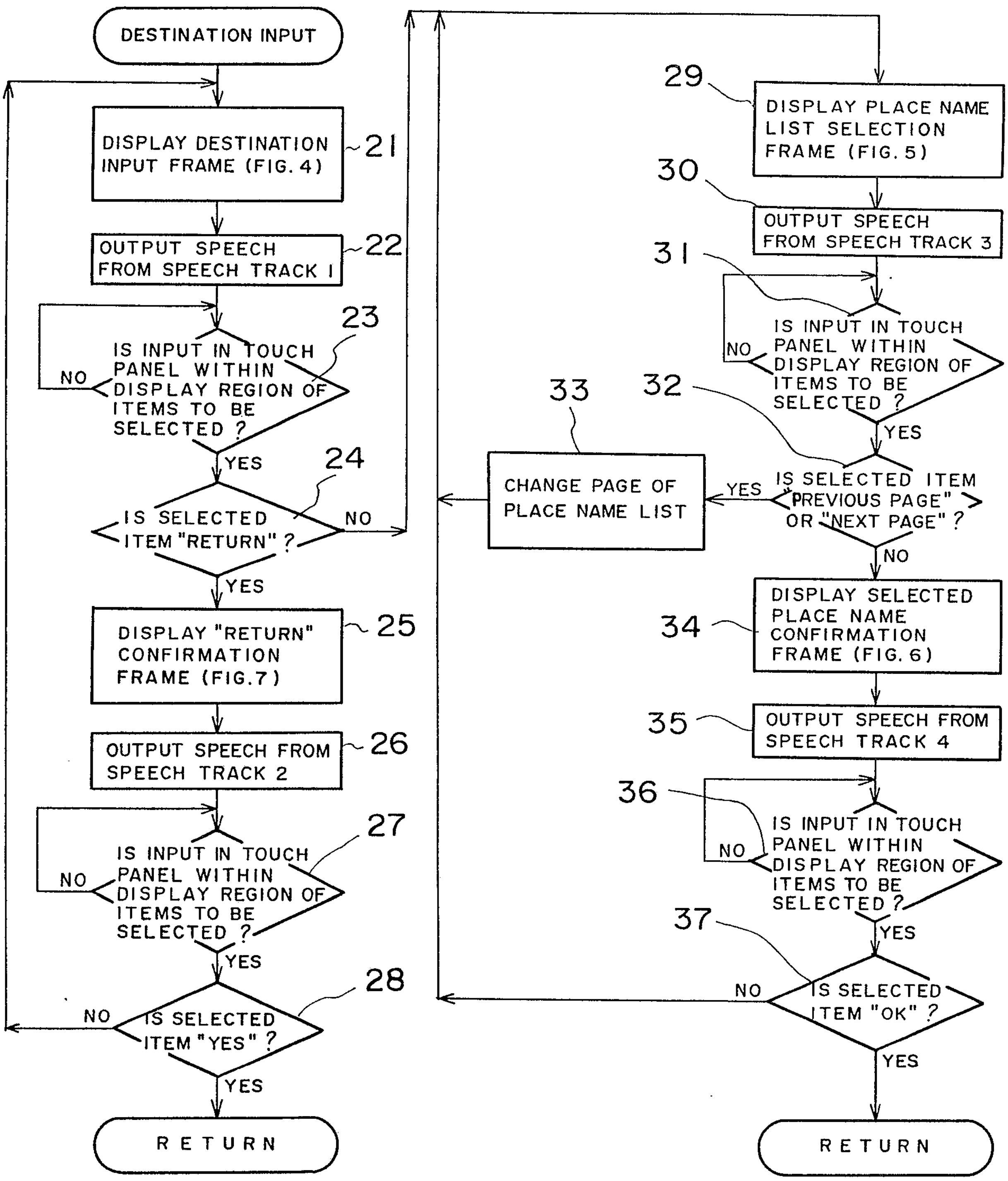

DESTINATION INPUT
DISPLAY DESTINATION INPUT FRAME (FIG. 4)
21
OUTPUT SPEECH FROM SPEECH TRACK 1
22
IS INPUT IN TOUCH PANEL WITHIN DISPLAY REGION OF ITEMS TO BE SELECTED ?
23
NO
YES
IS SELECTED ITEM "RETURN" ?
24
NO
YES
DISPLAY "RETURN" CONFIRMATION FRAME (FIG.7)
25
OUTPUT SPEECH FROM SPEECH TRACK 2
26
IS INPUT IN TOUCH PANEL WITHIN DISPLAY REGION OF ITEMS TO BE SELECTED ?
27
NO
YES
IS SELECTED ITEM "YES" ?
28
NO
YES
RETURN
DISPLAY PLACE NAME LIST SELECTION FRAME (FIG. 5)
29
OUTPUT SPEECH FROM SPEECH TRACK 3
30
IS INPUT IN TOUCH PANEL WITHIN DISPLAY REGION OF ITEMS TO BE SELECTED ?
31
NO
YES
IS SELECTED ITEM "PREVIOUS PAGE" OR "NEXT PAGE" ?
32
YES
CHANGE PAGE OF PLACE NAME LIST
33
NO
DISPLAY SELECTED PLACE NAME CONFIRMATION FRAME (FIG. 6)
34
OUTPUT SPEECH FROM SPEECH TRACK 4
35
IS INPUT IN TOUCH PANEL WITHIN DISPLAY REGION OF ITEMS TO BE SELECTED ?
36
NO
YES
IS SELECTED ITEM "OK" ?
37
NO
YES
RETURN

Fig.10

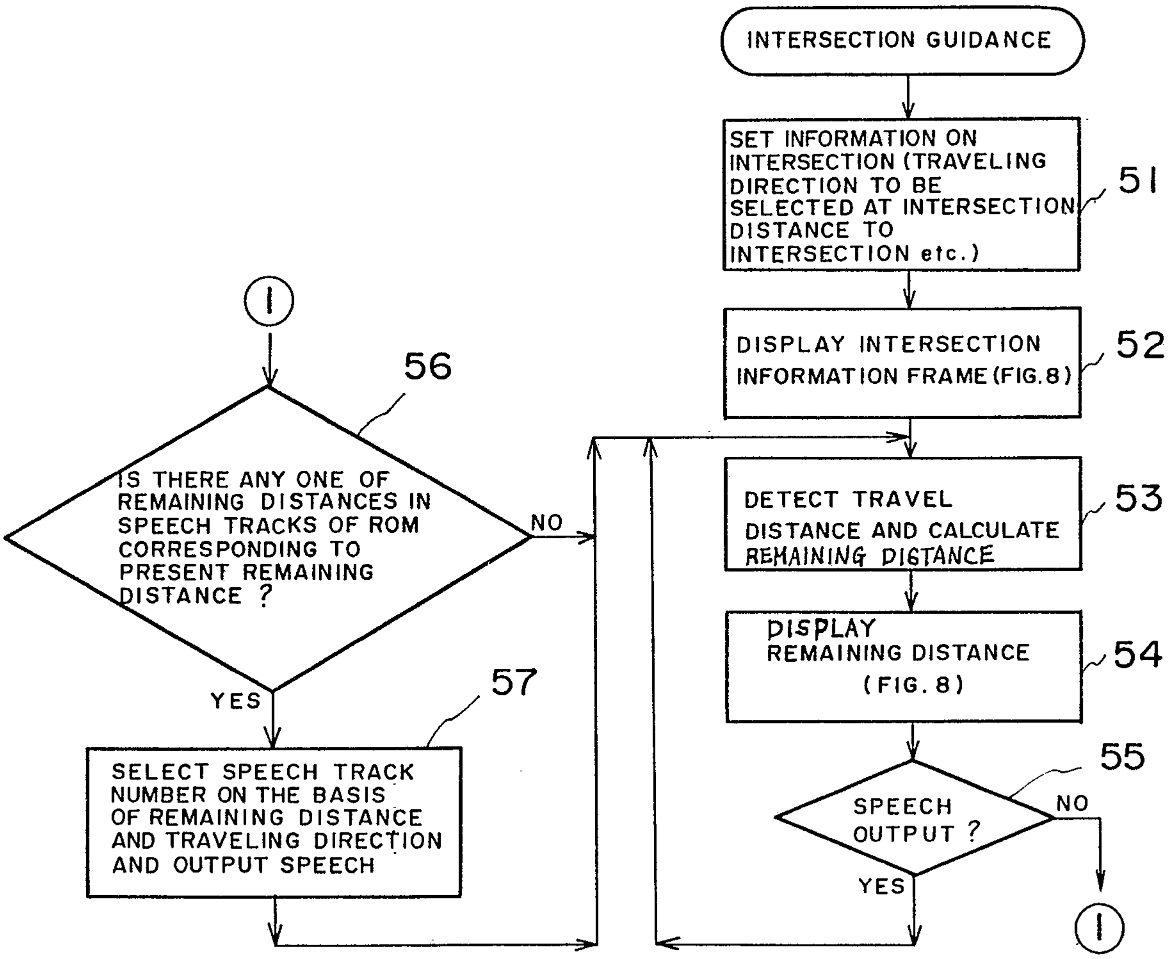
INTERSECTION GUIDANCE
SET INFORMATION ON INTERSECTION (TRAVELING DIRECTION TO BE SELECTED AT INTERSECTION DISTANCE TO INTERSECTION etc.)
51
DISPLAY INTERSECTION INFORMATION FRAME (FIG.8)
52
DETECT TRAVEL DISTANCE AND CALCULATE REMAINING DISTANCE
53
DISPLAY REMAINING DISTANCE (FIG. 8)
54
SPEECH OUTPUT ?
55
NO
YES
1
1
IS THERE ANY ONE OF REMAINING DISTANCES IN SPEECH TRACKS OF ROM CORRESPONDING TO PRESENT REMAINING DISTANCE ?
56
NO
YES
SELECT SPEECH TRACK NUMBER ON THE BASIS OF REMAINING DISTANCE AND TRAVELING DIRECTION AND OUTPUT SPEECH
57

European Patent Office

# EUROPEAN SEARCH REPORT

Application Number

EP 88 31 2380

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | CHIP MAGAZIN, no. 11, November 1985, pages 42-47; "Elektronische Beifahrer" * Page 42, columns 1,2; page 43, last 2 paragraphs * --- | 1-5 | G 09 B 29/10<br>G 01 C 21/22 |
| A | US-A-4 334 248 (N. MAIOCCO) * Column 1, lines 44-68; column 2, lines 1-12; figures * --- | 1-4 | |
| A | WO-A-8 805 199 (BOSCH GmbH) ----- | | |
| | | | TECHNICAL FIELDS SEARCHED (Int. Cl.4) |
| | | | G 09 B<br>G 01 C |

The present search report has been drawn up for all claims

| Place of search | Date of completion of the search | Examiner |
|---|---|---|
| THE HAGUE | 19-02-1989 | ODGERS M.L. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)